# EUROPÄISCHE PATENTANMELDUNG

(11) **EP 0 695 862 A1**
(43) Veröffentlichungstag der Anmeldung: **07.02.1996**
(21) Anmeldenummer: 95108854.1
(22) Anmeldetag: 20.06.1995
(51) Int. Cl.: F02D 17/02, F01N 3/22

(54) **Brennkraftmaschine mit einem zeitweise unbefeuert betreibbaren Zylinder**

(30) Priorität: 01.08.1994 DE 4427200
(71) Anmelder: Bayerische Motoren Werke Aktiengesellschaft, D-80788 München (DE)
(72) Erfinder: Velthuis, Jan, D-86899 Pitzling (DE)

(57) **Zusammenfassung**

Zumindest ein Zylinder (1) ein mehrzylindrigen quantitätsgesteuerten Hubkolben-Brennkraftmaschine soll zeitweise unbefeuert betreibbar sein, um als Luftpumpe zu wirken, mit Hilfe derer dem Abgas der weiterhin befeuerten Zylinder Frischgas beigemengt wird. Da eine für eine erfolgreiche Abgasnachverbrennung erforderliche Frischgasmenge beispielsweise im Leerlauf der Brennkraftmaschine auf diese Weise nicht gefördert werden kann, sind Maßnahmen vorgesehen, mit Hilfe derer in den unbefeuerten Zylinder (1) ein im wesentlichen ungedrosselter Frischgasstrom gelangt. Hierzu kann diesem Zylinder (1) eine ein Absperrorgan (12) aufweisende Frischgasversorgungsleitung (11) zugeordnet sein, die einen Bypass zu dem an der Sauganlage (9) vorgesehenen üblichen Drosselorgan (10) bildet.

## Beschreibung

Die Erfindung betrifft eine quantitätsgesteuerte Brennkraftmaschine, insbesondere Hubkolben-Brennkraftmaschine, mit mehreren Zylindern, von denen zumindest einer zeitweise unbefeuert betreibbar ist, um dem Abgas der befeuerten Zylinder Frischgas beizumengen, sowie mit Mengensteuerung, insbesondere durch ein Drosselorgan für den den Zylindern zugeführten Frischgasstrom.
Beispielsweise aus der DE-OS 21 63 537 ist es bekannt, einen oder auch mehrere Zylinder einer mehrzylindrigen Brennkraftmaschine zeitweise nicht zu befeuern, dabei jedoch diese nicht befeuerten Zylinder weiterhin Frischgas ansaugen zu lassen, welches anschließend komprimiert und danach als unverbranntes Frischgas den Abgasen der befeuerten Zylinder beigemengt wird. Der oder die nicht befeuerte(n) Zylinder wirkt/wirken somit als Luftpumpe, mit Hilfe derer u. a. Sauerstoff dem Abgasstrom der befeuerten Zylinder zugeführt werden kann, um eine Nachverbrennung dieses Abgasstromes zu erzielen. Mit einer derartigen Nachverbrennung kann zum einen die Menge von Schadstoffen im Abgasstrom herabgesetzt werden, zum anderen kann eine in der Abgasanlage der Brennkraftmaschine vorgesehene Abgasreinigungsvorrichtung durch diese Nachverbrennung im Anschluß an einen Kaltstart der Brennkraftmaschine beschleunigt auf ihre Betriebstemperatur gebracht werden.

Es hat sich jedoch gezeigt, daß die Menge von Frischgas, die ein unbefeuert betriebener Zylinder zu fördern in der Lage ist, für eine hinreichende Abgasnachverbrennung nicht immer ausreichend ist. Dieses Phänomen tritt insbesondere dann auf, wenn anschließend an einen Kaltstart die quantitätsgesteuerte Brennkraftmaschine nur mit niedriger Last betrieben wird. Das Drosselorgan (die Drosselklappe), mit dem die Menge des den Zylindern zugeführten Frischgasstromes und somit der Betriebspunkt der Brennkraftmaschine eingestellt wird, ist dann nahezu geschlossen. Hierdurch erhält jedoch auch der unbefeuert betriebene Zylinder nur eine äußerst geringe Frischgasmenge, die nicht ausreicht, um eine wirkungsvolle Nachverbrennung im Abgassystem der Brennkraftmaschine herbeizuführen. Gleiches gilt, wenn die Menge des Frischgasstromes auf andere Weise, beispielsweise durch Änderung der Steuerzeiten der Zylinder-Einlaßventile gesteuert wird.

Aufgabe der Erfindung ist es daher, für diese geschilderte Problematik Abhilfemaßnahmen aufzuzeigen.
Zur Lösung dieser Aufgabe ist vorgesehen, daß in den unbefeuerten Zylinder ein im wesentlichen maximal möglicher - bei Verwendung eines Drosselorganes ein im wesentlichen ungedrosselter - Frischgasstrom gelangt. Vorteilhafte Aus- und Weiterbildungen sind Inhalt der Unteransprüche.

Erfindungsgemäß erhält derjenige (unbefeuerte) Zylinder, der als Luftpumpe zur Förderung eines Frischgasstromes in den Abgasstrom des oder der übrigen (befeuerten) Zylinder wirkt, unabhängig von der den übrigen Zylindern zugeführten Frischgasmenge im wesentlichen stets den maximal möglichen Frischgasstrom. Damit aber kann dieser unbefeuerte Zylinder eine ausreichende Menge von Frischgas und insbesondere Sauerstoff in die allen Brennkraftmaschinen-Zylindern gemeinsame Abgasanlage und somit in den Abgasstrom der befeuerten Zylinder fördern. Der Begriff des im wesentlichen maximal möglichen Frischgasstromes ist dabei so zu interpretieren, daß der unter den jeweiligen Randbedingungen jeweils optimale maximal mögliche Frischgasstrom gefördert werden soll bzw. kann. In Abhängigkeit vom jeweiligen Brennkraftmaschinen-Betriebspunkt kann es nämlich erforderlich sein, beispielsweise nur 75 % des maximalen Frischgasstromes ansaugen zu lassen, um eine übermäßig starke Auskühlung des Zylinders zu verhindern. Ebenso kann das Ziel möglichst niedriger Abgasemissionen eine geringfügige Drosselung des maximal möglichen Frischgasstromes erfordern.

Technisch umsetzbar ist die Erfindung auf einfache Weise bei einer mehrzylindrigen quantitätsgesteuerten Brennkraftmaschine, wenn jedem der Brennkraftmaschinen-Zylinder ein eigenes Drosselorgan zugeordnet ist, wenn also beispielsweise diese Brennkraftmaschine eine sog. Sauganlage mit Einzeldrosselklappen aufweist. In diesem Fall ist dafür Sorge zu tragen, daß das dem zeitweise unbefeuert betreibbaren Zylinder zugeordnete Drosselorgan im unbefeuerten Betrieb dieses Zylinders unabhängig von den Drosselorganen bzw. Drosselklappen der anderen (befeuerten) Zylinder seine Offenstellung einnimmt. Hingegen wird das Drosselorgan des zeitweise unbefeuert betreibbaren Zylinders dann, wenn dieser befeuert wird, bevorzugt synchron mit den Drosselorganen der anderen, stets befeuerten Zylinder betätigt. Die entsprechende synchrone bzw. abgekoppelte Betätigung der einzelnen Drosselorgane kann dabei durch mechanische Koppelung bzw. Entkoppelung realisiert werden, es ist jedoch auch möglich, die verschiedenen Drosselorgane/Drosselklappen voneinander getrennt elektromotorisch zu betätigen und dabei die einzelnen Stellmotoren wie gewünscht anzusteuern. Wird hingegen die Mengensteuerung ohne Drosselorgan vollzogen, so beispielsweise durch Änderung der Ventilsteuerzeiten, so können entsprechende geeignete Maßnahmen ergriffen werden, den maximal möglichen Frischgasstrom in den Zylinder gelangen zu lassen, beispielsweise durch geeignete Ventilsteuerseiten.

In diesem Zusammenhang sei kurz darauf hingewiesen, daß der zeitweise unbefeuert betreibbare Zylinder insbesondere dadurch unbefeuert betrieben wird, daß diesem Zylinder kein Kraftstoff zugeführt wird. Hierzu kann das diesem Zylinder zugeordnete Kraftstoff-Einspritzventil im unbefeuerten Betrieb abgeschaltet werden. Zusätzlich oder alternativ kann auch eine Zündquelle (üblicherweise eine Zündkerze), mit Hilfe derer ein im Zylinder komprimiertes Frischgas-Kraftstoff-Gemisch gezündet wird, bei nicht befeuertem Betrieb dieses Zylinders stillgesetzt werden.

Ein im wesentlichen ungedrosselter Frischgasstrom kann jedoch auch dann in den erwünschtermaßen unbefeuerten Zylinder eingebracht werden, wenn die Brennkraftmaschine keine Sauganlage mit Einzeldrosselklappen aufweist, sondern wenn im wesentlichen eine einzige Drosselklappe für die mehrere Zylinder versorgende Sauganlage vorgesehen ist. In diesem Falle kann für den zeitweise unbefeuert betreibbaren Zylinder eine eigene Frischgasversorgungsleitung vorgesehen sein, die einen Bypass zum Drosselorgan bildet. Diese Frischgasversorgungsleitung kann in einem diesem Zylinder zugeordneten Ansaugkanal münden und von einem stromauf der Sauganlagen-Drosselklappe vorgesehenen Luftfiltergehäuse abzweigen. Dabei ist in dieser Frischgasversorgungsleitung ein separates Absperrorgan erforderlich, das immer dann, wenn dieser Zylinder befeuert wird, diese Frischgasversorgungsleitung absperrt, um zu verhindern, daß dieser Zylinder dann über die Frischgasversorgungsleitung unter Umgehung des Drosselorganes Falschluft ansaugt. Ebenso kann es empfehlenswert sein, im Ansaugkanal des zeitweise unbefeuert betreibbaren Zylinders stromauf der Mündung der Frischgasversorgungsleitung eine Rückschlagventilvorrichtung oder ebenfalls ein Sperrventil vorzusehen, um zu verhindern, daß über die Frischgasversorgungsleitung Falschluft in die Sauganlage und somit zu den befeuerten Zylindern gelangen kann.

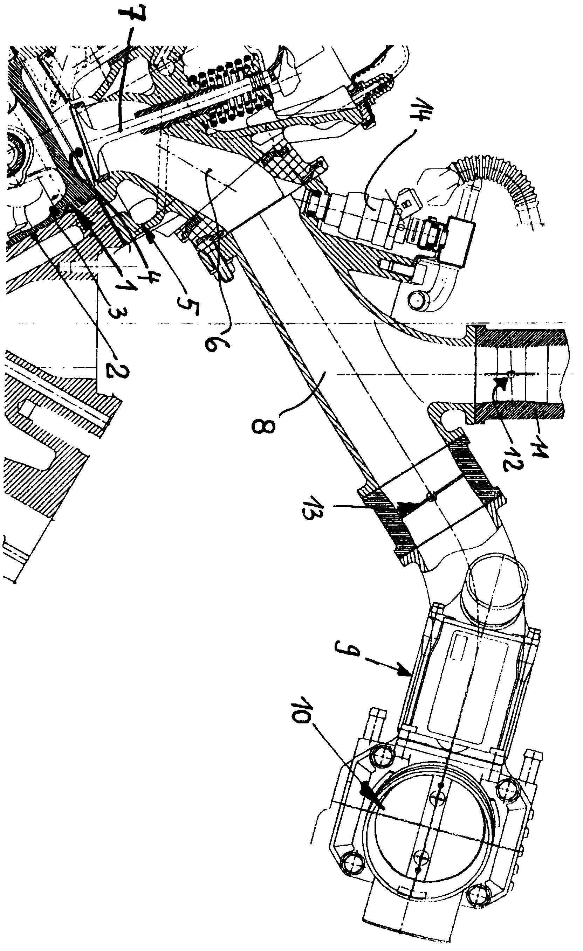

Der näheren Erläuterung dient ein bevorzugtes Ausführungsbeispiel, das in der einzigen Figur in einem Teilschnitt dargestellt ist.
Eine nur bruchstückhaft gezeigte Brennkraftmaschine weist zumindest einen Zylinder 1 auf, der zeitweise unbefeuert betreibbar sein soll. Bei dieser Brennkraftmaschine handelt es sich um eine ansonsten durchaus übliche Brennkraftmaschine, d. h. der Zylinder 1 befindet sich innerhalb eines Kurbelgehäuses 2, wobei im Zylinder 1 ein Kolben 3 längsverschiebbar geführt ist. Nach oben hin begrenzt wird der Zylinder 1 bzw. der innerhalb dieses Zylinders 1 oberhalb des Kolbens 3 liegende Brennraum 4 durch einen Zylinderkopf 5, in dem auch ein Einlaßkanal 6 vorgesehen ist, der im Brennraum 4 mündet, wenn das Einlaßventil 7 geöffnet ist.

Außerhalb des Zylinderkopfes 5 schließt sich an den Einlaßkanal 6 ein Ansaugkanal 8 an, der letztlich von der Sauganlage 9 dieser Brennkraftmaschine abzweigt. Von dieser Sauganlage 9 zweigen auch die nicht gezeigten weiteren Ansaugkanäle ab, über die die weiteren Brennkraftmaschinen-Zylinder mit Frischgas versorgt werden. Am Einlaß der Sauganlage 9 ist ein Drosselorgan 10 in Form einer üblichen Drosselklappe vorgesehen. Mit Hilfe dieses Drosselorganes 10 kann die Menge des zu den Zylindern gelangenden Frischgasstromes bestimmt und somit der Lastpunkt der Brennkraftmaschine eingestellt werden.

In den Ansaugkanal 8 des zeitweise unbefeuert betreibbaren Zylinders 1 mündet eine Frischgasversorgungsleitung 11, in der ein Absperrorgan 12 vorgesehen ist. Bei geöffnetem Absperrorgan 12 kann über diese Frischgasleitung 11 ein im wesentlichen ungedrosselter Frischgasstrom unter Umgehung des Drosselorganes 10 in den Ansaugkanal 8 und somit in den Zylinder 1 gelangen. Diese Frischgasversorgungsleitung 11, die beispielsweise von der Reinluftschale eines stromauf des Drosselorganes 10 angeordneten Luftfilters abzweigen kann, stellt somit einen Bypass zum Drosselorgan 10 dar. Als weitere Besonderheit weist der Ansaugkanal 8 stromauf der Mündung der Frischgasversorgungsleitung 11, aber stromab der Abzweigestelle von der Sauganlage 9, ein Sperrventil 13 auf, das aber auch als Rückschlagventilvorrichtung ausgebildet sein kann.

Wie bereits angedeutet, soll der Zylinder 1 zeitweise unbefeuert betreibbar sein. Dabei wird das Kraftstoffeinspritzventil 14, über das Kraftstoff in den Einlaßkanal 6 eingebracht werden kann, stillgesetzt. Weiterhin soll jedoch dieser Zylinder 1 auch im unbefeuerten Betrieb Frischgas ansaugen, komprimieren und wieder ausschieben, da dieser Zylinder 1 dann als Luftpumpe arbeiten soll, die dem Abgasstrom der weiterhin befeuerten Zylinder einen Frischgasstrom beimengt, indem das Frischgas aus dem unbefeuerten Zylinder 1 wie üblich in die allen Zylindern gemeinsame, nicht gezeigte Brennkraftmaschinen-Abgasanlage eingeleitet wird. Jedoch ist insbesondere bei nahezu geschlossenem Drosselorgan 10 die Menge von Frischgas, die vom unbefeuert betriebenen Zylinder 1 angesaugt werden kann, zu gering. Daher wird dafür Sorge getragen, daß in den unbefeuerten Zylinder 1 ein im wesentlichen ungedrosselter Frischgasstrom gelangen kann. In diesem Falle wird dann das Sperrventil 13 geschlossen sowie das Absperrorgan 12 geöffnet. Nunmehr kann über die Frischgasversorgungsleitung 11 der Zylinder 1 soviel Frischgas wie möglich bzw. wie gesteuert vorgegeben ansaugen, da dieser Frischgasstrom wie erläutert in einem Bypass um das Drosselorgan 10 herumgeführt wird. In Abhängigkeit vom Öffnungsgrad des Absperrorganes 12 kann auch nur ein Teil des theoretisch maximal möglichen Frischgasstroms angesaugt werden, wenn dies unter den aktuellen Randbedingungen (beispielsweise unter Berücksichtigung der Zylinder-Auskühlung) oder der Abgasemissionen) günstig ist. Das geschlossene Sperrventil 13 sorgt dabei dafür, daß das über die Frischgasversorgungsleitung 11 herangeführte Frischgas nicht in die Sauganlage 9 und somit zu den anderen, weiterhin befeuerten Zylindern gelangen kann. Eine Rückschlagventilvorrichtung anstelle des Sperrventiles 13 würde die gleiche Funktion übernehmen, und hat dabei den Vorteil, daß eine Umschaltung nicht erforderlich ist, jedoch wirkt eine Rückschlagventilvorrichtung bei Befeuerung des Zyllinders als Drossel.

Soll zu einem späteren Zeitpunkt dieser Zylinder 1 wieder befeuert werden, d. h. soll der unbefeuerte Betrieb abgebrochen werden, so muß das Absperrorgan 12 in die die Frischgasversorgungsleitung 11 absperrende Position gebracht werden, gleichzeitig wird das Sperrventil 13 geöffnet. Wird dann auch das Kraftstoffeinspritzventil 14 wieder in Betrieb genommen, so gelangt in diesen Zylinder 1 die gleiche Menge von Kraftstoff-Frischgasgemisch wie in die übrigen Zylinder der Brennkraftmaschine, so daß auch dieser zuvor abgeschaltete bzw. unbefeuert betriebene Zylinder nunmehr wie üblich betrieben wird.

Mit den beschriebenen Maßnahmen kann ein unbefeuert betriebener Zylinder in allen Lastpunkten der Brennkraftmaschine 1 einen ausreichenden Frischgasstrom erhalten und somit als Luftpumpe für einen ausreichenden Frischgasstrom wirken, mit dem eine wirkungsvolle Nachverbrennung in der nicht gezeigten Abgasanlage der Brennkraftmaschine möglich ist, indem dieser von dem unbefeuert betriebenen Zylinder 1 geförderte Frischgasstrom dem Abgasstrom der weiterhin befeuert betriebenen Zylinder zugeführt wird. Dabei können eine Vielzahl von Details insbesondere konstruktiver Art durchaus abweichend vom gezeigten Ausführungsbeispiel gestaltet sein, ohne den Inhalt der Patentansprüche zu verlassen.

## Patentansprüche

1. Quantitätsgesteuerte Brennkraftmaschine mit mehreren Zylindern, von denen zumindest einer zeitweise unbefeuert betreibbar ist, um dem Abgas der befeuerten Zylinder Frischgas beizumengen, sowie mit Mengensteuerung, insbesondere durch ein Drosselorgan (10) für den den Zylindern zugeführten Frischgasstrom,
dadurch gekennzeichnet, daß in den unbefeuerten Zylinder (1) ein im wesentlichen maximal möglicher Frischgasstrom gelangt.

2. Brennkraftmaschine nach Anspruch 1,
dadurch gekennzeichnet, daß der maximal mögliche Frischgasstrom Randbedingungen entsprechend gesteuert wird.

3. Brennkraftmaschine nach Anspruch 1 oder 2,
dadurch gekennzeichnet, daß dem zeitweise unbefeuert betreibbaren Zylinder (1) eine ein Absperrorgan (12) aufweisende Frischgasversorgungsleitung (11) zugeordnet ist, die einen Bypass zum Drosselorgan (10) bildet.

4. Brennkraftmaschine nach Anspruch 3,
dadurch gekennzeichnet, daß die Frischgasversorgungsleitung (11) stromab eines Sperrventiles (13) oder einer Rückschlagventilvorrichtung in den Ansaugkanal (8) des zeitweise unbefeuert betreibbaren Zylinders (1) mündet, wobei der Ansaugkanal (8) von einer mehrere Zylinder versorgenden Sauganlage (9), der das Drosselorgan (10) zugeordnet ist, abzweigt.

5. Brennkraftmaschine nach Anspruch 1 oder 2,
dadurch gekennzeichnet, daß zumindest dem zeitweise unbefeuert betreibbaren Zylinder (1) ein eigenes Drosselorgan (10) zugeordnet ist, das im unbefeuerten Betrieb unabhängig von dem/den Drosselorgan(en) der befeuerten Zylinder seine Offenposition einnimmt.
